# EUROPEAN PATENT APPLICATION

(11) **EP 2 124 146 A1**
(43) Date of publication of application: **25.11.2009**
(21) Application number: 08290463.2
(22) Date of filing: 19.05.2008
(51) Int. Cl.: G06F 9/445, H04M 1/725

(54) **System and methods for managing applications on a mobile device adapted for reading tags**

(71) Applicant: Alcatel Lucent, 75008 Paris (FR)
(72) Inventor: Lou, Zhe, 2000 Antwerpen (BE); Van Broeck, Sigurd, 2980 Zoersel (BE); Trappeniers, Lieven Leopold Albertine, 2200 Herentals (BE)
(74) Representative: D'Halleweyn, Nele Veerle Trees Gertrudis

(57) **Abstract**

A system is disclosed for managing a mobile device adapted for reading tags(1), the mobile device (1) comprising at least one general mobile application (6), comprising
a. a broker means (2) adapted for communicating with the mobile device (1), adapted for receiving tag information from the mobile device (1) by means of the general mobile application (6) when the mobile device performs a reading action of a tag;
b. an application resolving means (4) for associating a set of at least 1 specific mobile application (7) for the tag, the broker means and the application resolving means being adapted for communicating with each other;
c. a mobile profiling means (3) adapted for profiling mobile applications for the mobile device, the broker means being adapted for communicating with the mobile profiling means.

A method for managing a mobile device adapted for reading tags is also provided.

## Description

### Technical field of the invention

The present invention relates to the field of systems and methods for managing mobile devices which are adapted for reading tags, e.g. RFID compatible mobile devices.

### Background of the invention

The combination of mobile handheld with RFID wireless technology as for instance "Near Field Communication" (NFC) as defined by the NFC Forum (www.nfc-forum.org) or "Electronic Product Code" (EPC), makes a variety of business opportunities possible.

In W02006111782, methods, devices and systems are disclosed for controlling application launching by means of a dedicated application launching table. A method for controlling launching of an application in a first mobile terminal device is provided. The first mobile device comprises a first near field communication (NFC) module. The method comprises the steps of maintaining a dedicated application launching table, detecting the presence of a second device adapted to communicate with the first terminal device, determining identification parameters relating to the second device, and launching at least one predetermined application in the first device, wherein said application is selected to be launched based on entries in the dedicated application launching table and on the determined identification parameters.
The application table is here limited by the resources of the mobile terminal device.

More and more NFC mobile applications, e.g. relating to payments, ticketing, access control, content distribution and smart advertising, are put on the portable devices, having relatively low memory and processing capacity. Managing these applications is becoming a problem for most end users, who lack knowledge and experience in installing and managing application onto their mobile devices as e.g. mobile phones. Moreover, retrieving, selecting and launching a specific mobile application becomes burdensome and even difficult with the limited input panel, as typically more than hundred applications may have to be installed on a mobile phone.

There is a need for systems and methods with mobile services that facilitate the management of applications, especially RFID applications, for end users.

### Summary of the invention

The term "comprising", should be interpreted as such that it does not exclude other elements or steps.

For the purpose of the present description, the following terminology has been used:
- Radio-frequency identification (RFID): is a method for an automatic identification of objects, based on storing and remotely retrieving data by reading devices called RFID tags or transponders. Examples of RFID technologies are NFC and EPC technologies.
- An RFID tag is a device that can be located on, in, or close to an associated object, as for instance a person, animal or product, by which the object can be identified by means of radio waves.
- The NFC technology specification has been initiated in the NFC Forum, which can be retrieved for instance at http://www.nfc-forum.org/specs/. Those specifications are further standardized in ISO, see e.g. 14443A/B, 15691, 15692, 15693, 18000, 18092, for more detailed information.
- a General Mobile Application (GMA) (6): adapted to serve as RFID events interface, to downloads/updates specific mobile applications, and to launch specific mobile applications.
- a Specific Mobile Application (SMA) (7): a specific application which is not the GMA, adapted for managing e.g. Tangible Media, X-Media advertisements, payments, ticketing etc.
- Broker means or Application Broker Service (ABS) (2): a service/server capable of or adapted for resolving RFIDs to applications by consulting the ACS (4), of checking whether the (specific) application (7) associated to the RFID exists and whether it is up-to-date on the mobile device ( e.g. mobile phone) by consulting MPS (3), capable of downloading a specific mobile application (7) from an Application Server (5) if necessary, and capable to transfer mobile applications back to the RFID enabled mobile handheld by means of OTA technology.
- application resolving means or Application Correlation Service (4) adapted for Associating/resolving RFIDs with/to applications.
- mobile profiling means or Mobile Profile Service (3) adapted for profiling mobile applications on said mobile device. The mobile profiling means is adapted for managing and storing profiles of mobile devices, by storing which applications are installed on those devices. The mobile profiling means is preferable put outside of the mobile device.
- RFID (and correspondingly NFC or EPC) application server or Application Server(s) (5) are adapted for or capable of hosting RFID applications, such as e.g. a Tangible Media Server, a Payment Server and a Ticketing Server as they are known to the skilled person.

It is to be noted that for the purpose of defining certain embodiments of the present invention the terminology RFID was used and that NFC and EPC technologies are only examples of RFID technologies to which the embodiments of the present invention can be applied.

The embodiments of the present invention are further not limited to RFID technology and RFID tags and compatible devices respectively. Indeed, a tag can be used, being a device that can be located on, in, or close to an associated object, as for instance a person, animal or product, by which the object can be identified by making use of any available state of the art technology.

The identification of the tag can thus also be based on state of the art technologies and identification methods. The RFID technology can be used in preferred embodiments. Other technologies can be for instance; barcode, semipedia, Bluetooth, etc.

According to a first aspect of the present invention, a system is disclosed for managing a mobile device adapted for reading tags (1), the mobile device (1) comprising at least one general mobile application (6), comprising
a. a broker means (2) adapted for communicating with the mobile device (1), and adapted for receiving tag information from the mobile device (1) by means of the general mobile application (6) when the mobile device performs an reading action of a tag;
b. an application resolving means (4) for associating a set of at least 1 specific mobile application (7) for the tag information (e.g. RFID), the broker means and the application resolving means being adapted for communicating with each other;
c. a mobile profiling means (3) adapted for profiling mobile applications for the mobile device, the broker means being adapted for communicating with the mobile profiling means.

The mobile device can for instance be a mobile phone or can be any mobile device having a limited storage capacity.

The mobile device managed by a system according to the present invention may comprise one or more specific mobile applications.

Preferably, the mobile device adapted for reading tags can be a RFID compatible mobile device.

The tag information, resulting from reading the tag, can be RFID information.

The reading action of the tag can be an RFID reading action of an RFID.

The set can comprise 1, 2, or more specific mobile applications. Typically it comprises 1 specific mobile application.

According to embodiments of the present invention, the system further comprises a means for installing or updating a specific mobile application (7) on the mobile device (1).

According to embodiments of the present invention, the system further comprises a means for instructing the GMA to install installation or update of a specific mobile application (7) on the mobile device (1).
After that the GMA receives the software package for a specific mobile application, it can starts its installation or can update already existing one on the mobile device.

According to embodiments of the present invention, the system further comprises an application server (5) (e.g. RFID (e.g. NFC or EPC)server ), the broker means (2) being adapted for communicating with the application (e.g. RFID) server (5).

According to certain embodiments of the present invention, the system may be adapted such that it needs to read more then one tag (e.g. RFID) in order to associate a set of at least one application. For instance, a tag (e.g. an RFID) can be associated with several applications, such that the system may not be able to resolve which application should be launched by reading/touching only one tag. In that case, it may be necessary to read more than one tag to identify the specific application.

According to a second aspect of the present invention, a mobile device adapted for reading tags (1) (for instance a RFID compatible mobile device), is disclosed adapted for communicating with a system according to the first aspect.

According to embodiments of the present invention, the mobile device is further adapted for communication its mobile ID and tag information (e.g. an RFID) to the system, and adapted for launching, updating or installing a specific mobile application (7) at the request of the system.

According to a third aspect of the present invention, a method is disclosed for managing mobile device adapted for reading tags (e.g. an RFID (e.g. NFC) compatible mobile device) (1), by means of a system according to embodiments of the first aspect of the present invention, comprising:
a. reading a tag (e.g. RFID);
b. associating a specific mobile application (7) to the tag;
c. checking whether said mobile device comprises said specific mobile application (7), by comparing the associated application with a mobile profile, which is kept at a location outside the mobile device, in said mobile profiling means (3);
d. updating or installing and/or launching said specific mobile application (7) on said mobile device (1).

The method may further comprise sending the tag information (e.g. RFID) and the mobile ID (identification information for the mobile device) of the mobile device to the broker means (2); and resolving the received RFID by the application resolving means (4) to retrieve an associated specific mobile application.

Further aspects of the present invention are described by the dependent claims. The features from the dependent claims, features of any of the independent claims and any features of other dependent claims may be combined as considered appropriate to the person of ordinary skill, and not only in the particular combinations as defined by the claims.

Features and embodiments for the various aspects of the present invention, corresponding to features and embodiments of other aspect of the present invention, as will be recognised by the person of ordinary skill, are similarly considered to be within the scope of the present invention.

### Brief description of the drawings

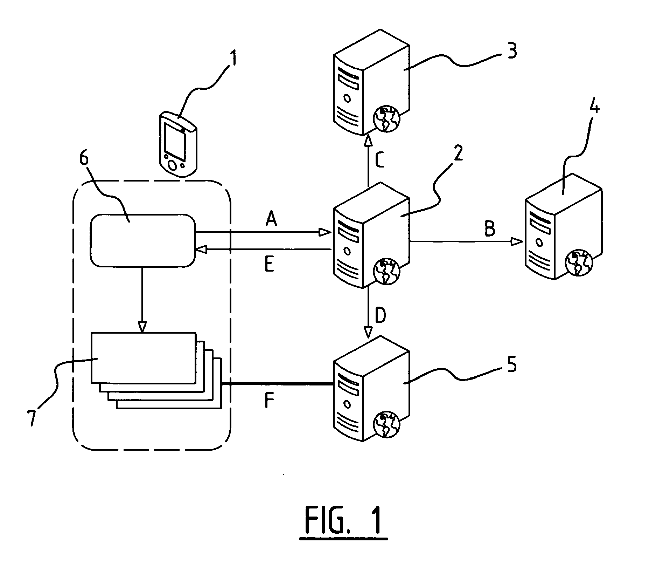

Fig. 1 illustrates embodiments of the present invention.

### Description of illustrative embodiments

The above and other advantageous features and objects of the invention will become more apparent and the invention will be better understood from the following detailed description when read in conjunction with the respective drawings.

The description of aspects of the present invention is performed by means of particular embodiments and with reference to certain drawings but the invention is not limited thereto. Depicted figures are only schematic and should not be considered as limiting. E.g. certain elements or features may be shown out of proportion or out of scale with respect to other elements.

In the description of certain embodiments according to the present invention, various features are sometimes grouped together in a single embodiment, figure, or description thereof for the purpose of aiding in the understanding of one or more of the various inventive aspects. This is not to be interpreted as if all features of the group are necessarily present to solve a particular problem. Inventive aspects may lie in less than all features of such a group of features present in the description of a particular embodiment.

According to an embodiment of the present invention, the system comprises of an Application Broker Service (ABS) (2), an Application Correlation Service (ACS) (4), Mobile Profile Service (MPS) (3), Application Server(s) (5), and RFID enabled handheld (1) with mobile applications (6) (7).

It is to be noted that the mobile applications mentioned in this description can for instance reside in the mobile handheld or on the SIM card of the mobile device or device.

The following scenario and message flow further illustrates embodiments of the present invention, as also illustrated in Fig. 1.

A user found an interesting mobile RFID application (7) and wants to make use of it. He uses his RFID enabled handheld (1) and touches/reads an RFID related to the application. The General Mobile Application (GMA) that is running on the mobile handheld (1) sends the retrieved RFID together with the mobile ID to the Application Broker Service (ABS) (2) (A). The ABS (2) will first resolve (B) the received RFID into a mobile application via the ACS (4), then consults the MPS (3) (C) to see whether the application is already on that mobile handheld and/or whether the application on the mobile device is up-to-date if existing.

If the ABS (2) detects the mobile application (7) is not on the mobile handheld or it is not up-to-date, it will download the mobile application (7) (D) and transfer it back to the mobile handheld (E) by means of OTA (Over The Air technology). After finishing downloading the mobile application, the GMA (6) will launch the specific mobile application (7), which typically takes over the control of RFID interface and starts to talk/communicate with a specific Application Server (5) (F).

In the alternative, if the ABS detects that the up-to-date application already exists on the mobile handheld, then it will instruct the GMA (6) to launch the SMA (7) as such. The SMA can then take over the control of RFID interface and start talking/communicating to its corresponding Application Server (5).

While some embodiments described herein include some but not other features included in other embodiments, combinations of features of different embodiments are meant to be within the scope of the invention, and form different embodiments, as would be understood by the skilled person.

While the principles of the invention have been set out above in connection with specific embodiments, it is to be clearly understood that this description is merely made by way of example and not as a limitation of the scope of protection which is determined by the appended claims.

## Claims

1. System for managing a mobile device adapted for reading tags(1), said mobile device (1) comprising at least one general mobile application (6), comprising
a. a broker means (2) adapted for communicating with said mobile device (1), adapted for receiving tag information from said mobile device (1) by means of said general mobile application (6) when said mobile device performs a reading action of a tag;
b. an application resolving means (4) for associating a set of at least 1 specific mobile application (7) for said tag, said broker means and said application resolving means being adapted for communicating with each other;
c. a mobile profiling means (3) adapted for profiling mobile applications for said mobile device, said broker means being adapted for communicating with said mobile profiling means.

2. A system according to claim 1, further comprising a means for installing or updating a specific mobile application (7) on said mobile device (1).

3. A system according to claim 2, further comprising an application server (5), said broker means (2) being adapted for communicating with said application server (5).

4. A mobile device adapted for reading tags (1) adapted for communicating with a system according to claim 1 to 3.

5. A mobile device according to claim 4, adapted for communication its mobile ID and tag information to said system, and adapted for launching, updating or installing a specific mobile application (7) at the request of said system.

6. A method for managing a mobile device (1), by means of a system according to claim 1 to 4, comprising:
a. reading a tag;
b. associating a specific mobile application (7) to the tag;
c. checking whether said mobile device comprises said specific mobile application (7), by comparing the associated application with a mobile profile, which is kept at a location outside the mobile device, in said mobile profiling means (3);
d. updating or installing and/or launching said specific mobile application (7) on said mobile device (1).

7. A method according to claim 6, further comprising sending said tag information and the mobile ID of said mobile device to said broker means (2); and resolving the received tag information by the application resolving means (4) to retrieve an associated specific mobile application.
